# EUROPEAN PATENT SPECIFICATION

(11) **EP 3 030 955 B1**
(45) Date of publication and mention of the grant of the patent: **25.03.2020**
(21) Application number: 14753315.2
(22) Date of filing: 29.07.2014
(51) Int. Cl.: G06F 3/0482, G06F 3/0484, G06F 3/048

(54) **WINDOW MANAGER**
FENSTERMANAGER
GESTIONNAIRE DE FENÊTRES

(30) Priority: 09.08.2013 JP 2013166682
(43) Date of publication of application: 15.06.2016
(73) Proprietor: Sony Corporation, Tokyo 108-0075 (JP)
(72) Inventor: OHKI, Yoshihito, Tokyo 108-0075 (JP); MORIYA, Shoichiro, Tokyo 108-0075 (JP); OKUMURA, Yasushi, Tokyo 108-0075 (JP)
(74) Representative: MFG Patentanwälte Meyer-Wildhagen Meggle-Freund Gerhard PartG mbB
(86) International application number: PCT/JP2014/003972
(87) International publication number: WO 2015/019575

(56) References cited:
- JP-A- 2008 052 580
- US-A- 6 008 809
- US-A1- 2011 175 930
- US-A1- 2012 084 717
- US-A1- 2012 244 913
- Matt Spiderpig: "xmonad.hs", GitHub, 25 June 2013 (2013-06-25), XP055404850, Retrieved from the Internet: URL:https://github.com/SpiderPig/confscrip ts/blob/41767c5d849c80ec5ce9aded70579598a7 eb46ee/xmonad/xmonad.hs#L351 [retrieved on 2017-09-07] & Adam Vogt ET AL: "xmonad/Layout.hs", GitHub, 9 June 2011 (2011-06-09), XP055404846, Retrieved from the Internet: URL:https://github.com/xmonad/xmonad/blob/ b0dda7b3513163cd7c95b591dd3d4f83e9ceb475/X Monad/Layout.hs#L70-L71 [retrieved on 2017-09-07]

## Description

### [Technical Field]

The present disclosure relates to an information processing device, an information processing method, and a program.

### [Background Art]

In recent years, various kinds of content such as music, videos, and photos have been offered. For example, terminal devices such as personal computers (PCs), smartphones, and tablet terminals display a screen including content or a list of information regarding the content so that users can select desired content.

For example, JP 2010-128754A discloses a technology for displaying a screen including a list of thumbnails of content such as music, videos, and photos.

Moreover, from US patent application publication US 2012/0084717 A1, a window management method, apparatus and a computing device are known. The window management apparatus has a window rendering management device for managing at least two windows in response to an input operation, to change the size and location of a target window of the at least two windows to which the input operation is directed.

US patent application publication US 2012/0244913 A1 discloses a flexible user interface layout which includes a split-screen display that provides flexibility in determining which information will be displayed on the screen. The screen may be divided into display panes in which a user may drag a center point or node of intersection to increase the size of a selected display pane, while reducing the size of at least some of the other display panes.

An apparatus and method for viewing multiple windows simultaneously within a dynamic window is known from US 6,008,809 A. A user can relate several windows shown on a display without having to repeatedly arrange and size each individual window.

Japanese patent application publication JP 2008 052580 A discloses a tiled window manager supporting automatic tile expansion of the selected tile.

The *xmonad* tiling window manager supports programmable mouse event bindings that can cause a tiled window to be expanded when focused and the other windows to be resized accordingly.

### [Summary]

### [Technical Problem]

In the technologies of the related art including the technology disclosed in PTL 1 described above, however, when content is selected from a list of the content, a separate screen for reproducing the selected content is normally displayed. Therefore, for example, to select other content again after a user selects content once, it is necessary for the user to cause a terminal device to display a screen including a list of the content again and select content from the list of the content. For this reason, since it takes a long time to reselect content, a burden on the user may increase. As another example, a screen including a first region for displaying a list of the content and a second region for displaying the selected content or detailed information regarding the content is displayed in some cases. However, whenever a user selects and confirms content, a visual line of the user is moved between the first and second regions. As a result, since it takes a long time to select and confirm the content, a burden on the user may increase. Thus, in the technologies of the related art, user convenience may deteriorate.

Accordingly, it is desirable to provide a configuration capable of increasing convenience for users selecting content.

### [Solution to Problem]

According to a first aspect, the present invention provides an information processing apparatus in accordance with independent claim 1. According to a second aspect, the present invention provides an information processing method on accordance with independent claim 6. According to a third aspect, the present invention provides a non-transitory computer-readable medium in accordance with independent claim 7. Further aspects of the invention are set forth in the dependent claims, the drawings and the following description.

According to an aspect of the present disclosure, there is provided an information processing apparatus including: a circuitry configured to: initiate, upon a selection of a content region, a change in size of the selected content region and at least one of a rearrangement and a resizing of other content regions that are not the selected content region, wherein the other content regions are at least one of rearranged and resized to each substantially maintain a respective relative positioning to the selected content region as prior to the selection of the content region, and wherein the selected content region is one of increased in size or decreased in size in a direction along a first axis, and the other content regions are another one of increased in size or decreased in size in the direction along the first axis.

According to another aspect of the present disclosure, there is provided an information processing method including: initiating, upon a selection of a content region, a change in size of the selected content region and at least one of a rearrangement and a resizing of other content regions that are not the selected content region, wherein the other content regions are at least one of rearranged and resized to each substantially maintain a respective relative positioning to the selected content region as prior to the selection of the content region, and wherein the selected content region is one of increased in size or decreased in size in a direction along a first axis, and the other content regions are another one of increased in size or decreased in size in the direction along the first axis.

According to another aspect of the present disclosure, there is provided a non-transitory computer-readable medium having embodied thereon a program, which when executed by a computer causes the computer to perform a method, the method including: initiating, upon a selection of a content region, a change in size of the selected content region and at least one of a rearrangement and a resizing of other content regions that are not the selected content region, wherein the other content regions are at least one of rearranged and resized to each substantially maintain a respective relative positioning to the selected content region as prior to the selection of the content region, and wherein the selected content region is one of increased in size or decreased in size in a direction along a first axis, and the other content regions are another one of increased in size or decreased in size in the direction along the first axis.

### [Advantageous Effects of Invention]

According to embodiments of the present disclosure described above, it is possible to improve convenience for users selecting content. Also, the foregoing advantageous effects are not necessarily limited, and any advantageous effect obtained in the present specification or other advantageous effects understood from the present specification may be obtained along with the foregoing advantageous effects or instead of the foregoing advantageous effects.

### Brief Description of Drawings

[fig. 1] FIG. 1 is an explanatory diagram illustrating an example of the outer appearance of an information processing device according to a first embodiment of the present disclosure.
[fig.2] FIG. 2 is a diagram for describing an example of a hardware configuration of the information processing device according to the first embodiment.
[fig.3] FIG. 3 is a block diagram illustrating an example of a functional configuration of the information processing device according to the first embodiment.
[fig.4] FIG. 4 is an explanatory diagram illustrating an example of a screen including a plurality of content regions.
[fig.5] FIG. 5 is an explanatory diagram illustrating an example of a screen when a content region is selected.
[fig.6] FIG. 6 is an explanatory diagram illustrating the sizes of the content region before expansion or contraction.
[fig.7] FIG. 7 is an explanatory diagram illustrating the sizes of the content region before expansion or contraction.
[fig.8] FIG. 8 is an explanatory diagram illustrating an example of a field of which a range of a part is generated as a screen.
[fig.9] FIG. 9 is an explanatory diagram illustrating an example of a screen when a separate content region is further selected.
[fig. 10] FIG. 10 is an explanatory diagram illustrating an example of a screen when information disposed in the content region is selected.
[fig. 11] FIG. 11 is an explanatory diagram illustrating another example of the screen when the content region is selected.
[fig. 12] FIG. 12 is an explanatory diagram illustrating still another example of the screen when the content region is selected.
[fig.13] FIG. 13 is an explanatory diagram illustrating an example of a screen in a case in which the content is still image content.
[fig. 14] FIG. 14 is an explanatory diagram illustrating an example of a screen when a content region is selected in the case in which the content is still image content.
[fig.15] FIG. 15 is an explanatory diagram illustrating an example of a screen when a content region is selected in a case in which content is moving image content.
[fig. 16] FIG. 16 is an explanatory diagram illustrating an example of a screen when the content is document content.
[fig.17] FIG. 17 is a flowchart illustrating an example of an overall flow of information processing according to the first embodiment.
[fig.18] FIG. 18 is an explanatory diagram illustrating an example of an overall configuration of an information processing system according to a second embodiment.
[fig.19] FIG. 19 is a block diagram illustrating an example of a hardware configuration of an information processing device according to the second embodiment.
[fig.20]FIG. 20 is a block diagram illustrating an example of a functional configuration of the information processing device according to the second embodiment.
[fig.21]FIG. 21 is a flowchart illustrating an example of an overall flow of information processing according to the second embodiment.

### Description of Embodiments

Hereinafter, embodiments of the present disclosure will be described in detail with reference to the appended drawings. Also, throughout the present specification and the drawings, the same reference numerals are given to constituent elements having substantially the same functional configuration and repeated description thereof will be omitted.

The description will be made in the following order.
1. First embodiment
   1.1. Outer appearance of information processing device
   1.2. Hardware configuration of information processing device
   1.3. Functional configuration of information processing device
   1.4. Specific example of screen control
   1.5. Processing flow
2. Second embodiment
   2.1. Overall configuration of information processing system
   2.2. Hardware configuration of information processing device
   2.3. Functional configuration of information processing device
   2.4. Processing flow
3. Conclusion

### <<1. First embodiment>>

First, a first embodiment of the present disclosure will be described.

### <1.1. Outer appearance of information processing device>

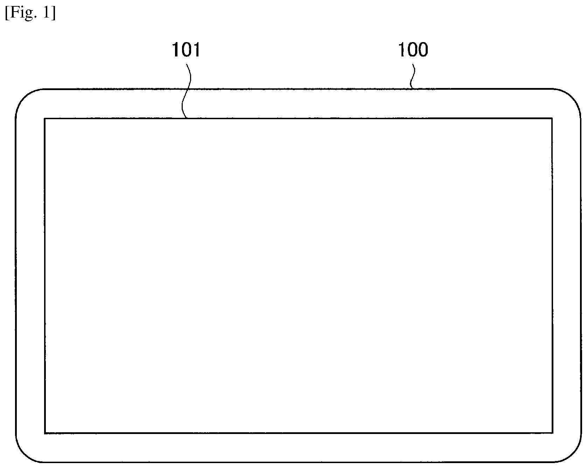

First, the outer appearance of an information processing device 100 according to a first embodiment of the present disclosure will be described with reference to FIG. 1. FIG. 1 is an explanatory diagram illustrating an example of the outer appearance of the information processing device 100 according to the first embodiment of the present disclosure. Referring to FIG. 1, the information processing device 100 is illustrated. The information processing device 100 is a terminal device and is, for example, a tablet terminal but is not limited thereto.

For example, the information processing device 100 includes a display device 101. The information processing device 100 displays a screen on the display device 101 so that a user of the information processing device 100 can view the screen.

For example, the information processing device 100 includes a touch panel. In this case, the display device 101 is a display surface of the touch panel. Also, the information processing device 100 detects a user's touch position on the touch panel and recognizes a user's touch operation from the detection result.

### <1.2. Hardware configuration of information processing device>

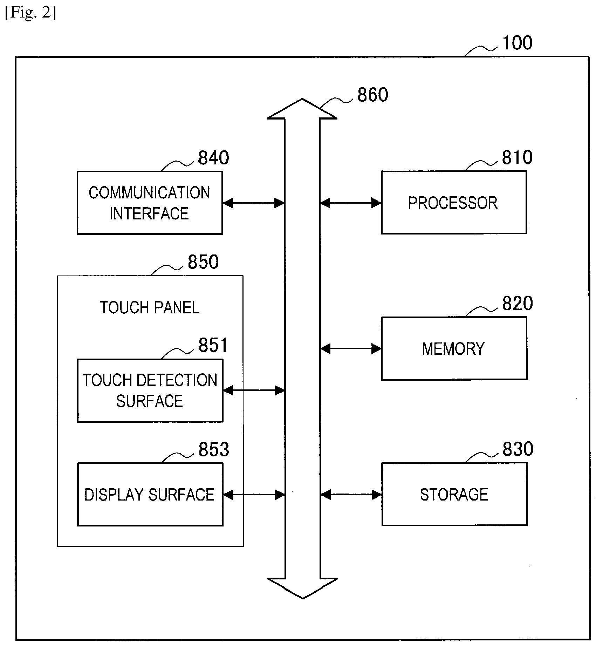

Next, an example of a hardware configuration of the information processing device 100 according to the first embodiment will be described with reference to FIG. 2. FIG. 2 is a block diagram illustrating an example of a hardware configuration of the information processing device 100 according to the first embodiment. Referring to FIG. 2, the information processing device 100 includes a processor 810, a memory 820, a storage 830, a communication interface 840, a touch panel 850, and a bus 860.

The processor 810 may be, for example, a central processing unit (CPU), a digital signal processor (DSP), or a system on chip (SoC) and performs various processes of the information processing device 100. The memory 820 includes a random access memory (RAM) and a read-only memory (ROM) and stores a program executed by the processor 810 and data. The storage 830 can include a storage medium such as a semiconductor memory or a hard disk.

The communication interface 840 is a communication unit of the information processing device 100 and communicates with an external device via a network (or directly). The communication interface 840 may be an interface for wireless communication and may, in this case, include a communication antenna, a radio frequency (RF) circuit, and a baseband processor, for example. Also, the communication interface 840 may be an interface for wired communication and may, in this case, include a connection terminal, a transmission circuit, and a circuit for other communication processing, for example.

The touch panel 850 includes a touch detection surface 851 and a display surface 853. The touch detection surface 851 detects a touch position on the touch panel 850. The touch detection surface 851 can be formed in accordance with any touch detection method such as an electrostatic capacitance method, a resistive film method, or an optical method. The display surface 853 displays an output image from the information processing device 100. The display surface 853 can be realized using, for example, a liquid crystal, an organic EL (Organic Light-Emitting Diode: OLED), or a cathode ray tube (CRT).

The bus 860 connects the processor 810, the memory 820, the storage 830, the communication interface 840, and the touch panel 850 to each other. The bus 860 may include a plurality of kinds of buses.

The above-described display device 101 is, for example, the touch panel 850.

### <1.3. Functional configuration of information processing device>

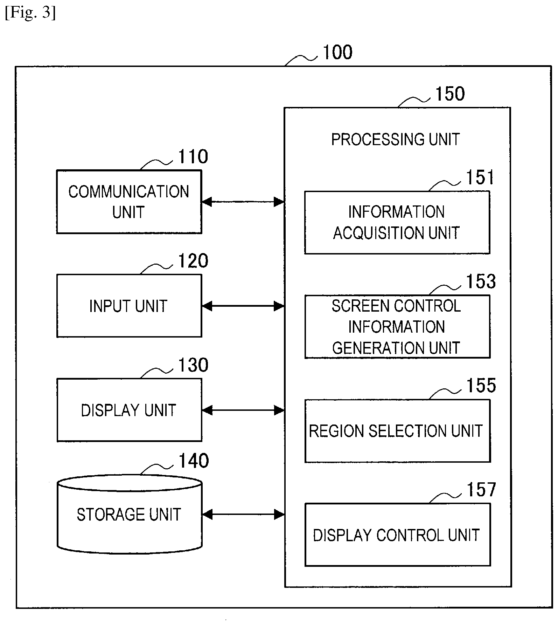

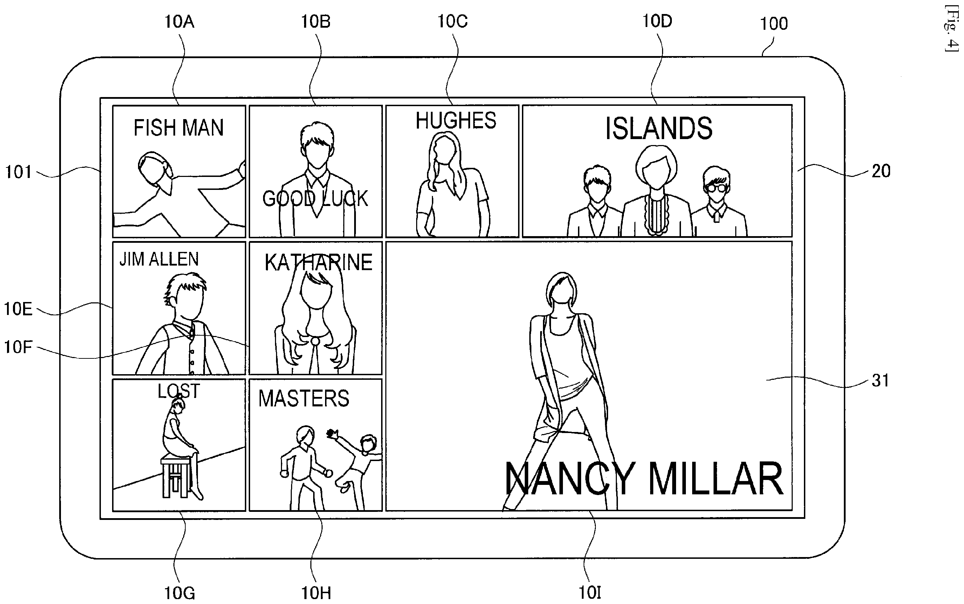

Next, an example of a functional configuration of the information processing device 100 according to the first embodiment will be described with reference to FIGS. 3 and 4. FIG. 3 is a block diagram illustrating an example of a functional configuration of the information processing device 100 according to the first embodiment. Referring to FIG. 3, the information processing device 100 includes a communication unit 110, an input unit 120, a display unit 130, a storage unit 140, and a processing unit 150.

### (Communication unit 110)

The communication unit 110 communicates with another device. For example, the communication unit 110 receives information from another device and provides the information to the processing unit 150. Also, the communication unit 110 transmits information from the processing unit 150 to another device.

### (Input unit 120)

The input unit 120 receives an input manipulation from the user of the information processing device 100. Then, the input unit 120 supplies input information according to the input manipulation to the processing unit 150.

### (Display unit 130)

The display unit 130 displays a screen so that the user of the information processing device 100 can see the screen. That is, the display unit 130 corresponds to the display device 101. For example, the display unit 130 displays the screen under the control of the processing unit 150 (display control unit 157).

### (Storage unit 140)

The storage unit 140 stores a program and data used for an operation of the information processing device 100.

### (Processing unit 150)

The processing unit 150 supplies various functions of the information processing device 100. The processing unit 150 includes an information acquisition unit 151, a screen control information generation unit 153, a region selection unit 155, and a display control unit 157.

### (Information acquisition unit 151)

The information acquisition unit 151 acquires information necessary for a process by the processing unit 150. For example, the information acquisition unit 151 acquires information from another device via the communication unit 110. For example, the information acquisition unit 151 also acquires information stored in the storage unit 140.

For example, the information acquisition unit 151 acquires content information. The information acquisition unit 151 may acquire content information stored in the storage unit 140 or may acquire content information from another device (for example, a server).

The content information is any kind of content or information regarding the content. For example, the kind of content is music content. Also, the kind of content may be still image content, moving image content, or document content. The kind of content may also be other kinds of content.

### (Screen control information generation unit 153)

The screen control information generation unit 153 generates information (hereinafter referred to as "screen control information") for controlling a screen including a plurality of regions in which the content information is disposed. Each of the plurality of regions is referred to as a "content region" below.

For example, the plurality of content regions are regions that line up on the screen in the vertical and horizontal directions of the screen. For example, each content region is a square or rectangular region and the plurality of content regions line up like tiles. Hereinafter, a specific example of the screen will be described with reference to FIG. 4.

FIG. 4 is an explanatory diagram illustrating an example of a screen including a plurality of content regions. Referring to FIG. 4, the information processing device 100 is illustrated. A screen 20 including 9 content regions 10 (that is, content regions 10A to 101) is displayed on the display device 101 of the information processing device 100. The 9 content regions 10 line up in the vertical and horizontal directions of the screen 20. Also, first information 31 (an image and the name of an artist) regarding music content is disposed as the content information in each content region. For example, the screen including the plurality of content regions lining up like tiles is displayed in this way.

For example, the screen control information is information used to generate the foregoing screen. More specifically, for example, the screen control information includes information indicating the position and the size of each of the plurality of content regions in the screen or in a part of the screen (for example, a window included in the screen). For example, the screen control information also includes information indicating content information (for example, an image and the name of an artist) disposed in each of the plurality of content regions.

Specific examples of screen control performed to generate the screen control information and the screen including the plurality of content regions will be described in detail in <1.4. Specific example of screen control> to be described below.

### (Region selection unit 155)

The region selection unit 155 selects at least one content region among the plurality of content regions.

For example, the region selection unit 155 selects at least one of the content regions according to an input manipulation from the user of the information processing device 100. More specifically, for example, when the input unit 120 receives an input manipulation from the user, the input unit 120 outputs input information according to the input manipulation. Then, the region selection unit 155 acquires the input information. When the input information is information for selecting a content region, the region selection unit 155 selects at least one content region among the plurality of content regions.

For example, the input manipulation is a touch manipulation on the touch panel and the input information is information indicating a touch position (or a set of touch positions). When a touch manipulation recognized from the input information (touch position) is tapping at a position corresponding to one content region among the plurality of content regions, the region selection unit 155 selects the one content region.

The region selection unit 155 may automatically select the at least one piece of information, instead of selecting the at least one content region according to the input manipulation from the user. For example, the region selection unit 155 may select at least one content region in sequence or at random among the plurality of content regions at a predetermined period.

### (Display control unit 157)

The display control unit 157 controls the display of the screen by the display unit 130. For example, the display control unit 157 generates a screen to be displayed by the display unit 130 and displays the screen on the display unit 130.

For example, the display control unit 157 generates a screen including the plurality of content regions based on the screen control information. This screen may include the plurality of content regions on the entire screen or may include the plurality of content regions in a part of the screen (for example, a window included in the screen).

More specifically, for example, as described above, the screen control information includes information indicating the position and the size of each of the plurality of content regions and the display control unit 157 generates a screen including the content regions with the sizes and at the positions indicated by the information. For example, as described above, the screen control information includes information indicating content information disposed in each of the plurality of content regions and the display control unit 157 generates a screen in which the content information indicated by this information is disposed in each content region.

The example of the functional configuration of the information processing device 100 according to the first embodiment will be described above. Also, the communication unit 110, the input unit 120, the display unit 130, and the storage unit 140 may be mounted on the communication interface 840, the touch detection surface 851, the display surface 853, and the storage 830, respectively. Each of the constituent elements included in the processing unit 150 may be mounted on the processor 810 that executes a program stored in the memory 820 or the storage 830. The program is a program causing the information processing device 100 or the processor 810 to function as each of the constituent elements included in the processing unit 150. The program may be retained in advance in the information processing device 100 or may be provided to the information processing device 100 by another device, as necessary.

### <1.4. Specific example of screen control>

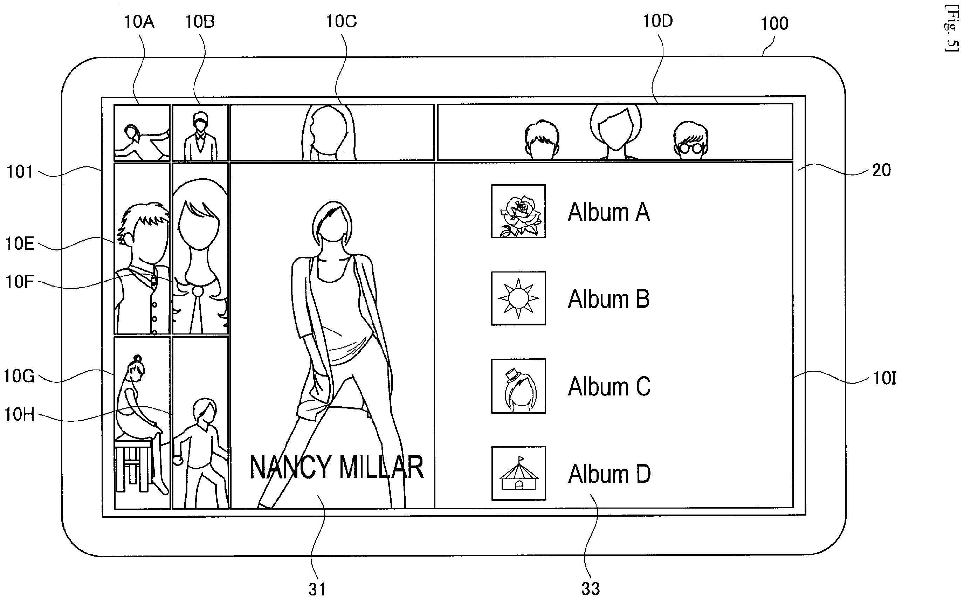

Next, a specific example of the screen control according to the embodiments of the present disclosure will be described with reference to FIGS. 5 to 16.

### (Basic screen control)

In particular, in embodiments of the present disclosure, at least one content region is selected among the plurality of content regions included in the screen. Then, the screen control information generation unit 153 generates information (that is, screen control information) for controlling the screen such that the at least one content region is expanded and other content regions of the plurality of content regions are contracted while a relative positional relation among the plurality of content regions is maintained on the screen.

For example, as described above, the plurality of content regions are regions lining up on the screen in the vertical and horizontal directions of the screen. For example, when the at least one content region is selected, the screen control information generation unit 153 generates the screen control information such that the at least one content region is expanded in the vertical and horizontal directions of the screen and the other content regions are contracted in at least one of the vertical and horizontal directions of the screen while the relative positional relation among the plurality of content regions is maintained on the screen.

More specifically, for example, when the at least one content region is selected, the screen control information generation unit 153 generates the screen control information such that the at least one content region is expanded in the vertical and horizontal directions of the screen, the content region lining up with the at least one content region in the vertical direction of the screen is contracted in the vertical direction of the screen, the content region lining up with the at least one content region in the horizontal direction of the screen is contracted in the horizontal direction of the screen, and the content region located in an oblique direction of the at least one content region is contracted in at least one of the vertical and horizontal directions of the screen while the relative positional relation among the plurality of content regions is maintained on the screen. Hereinafter, a specific example of this point will be described with reference to FIG. 5.

FIG. 5 is an explanatory diagram illustrating an example of the screen when the content region is selected. The example of FIG. 5 is a screen when the content region 101 is selected among the 9 content regions 10 included in the screen illustrated in FIG. 4. Referring to FIG. 5, the selected content region 101 is expanded in the vertical and horizontal directions of the screen 20. Also, the content regions 10C and 10D lining up with the content region 101 in the vertical direction are contracted in the vertical direction. Also, the content regions 10E, 10F, 10G, and 10H lining up with the content region 101 in the horizontal direction are contracted in the horizontal direction. Further, the content regions 10A and 10B located in an oblique direction of the content region 101 are contracted in the vertical and horizontal directions. As described above, when a content region is selected, screen control information is generated such that the selected content region is expanded and other content regions are contracted, and thus a screen is actually generated based on the screen control information. Also, in the selected content region 101, second information 33 (images and names of albums) regarding the music content is disposed in addition to the first information 31 (the image and the name of an artist) regarding music content after the expansion.

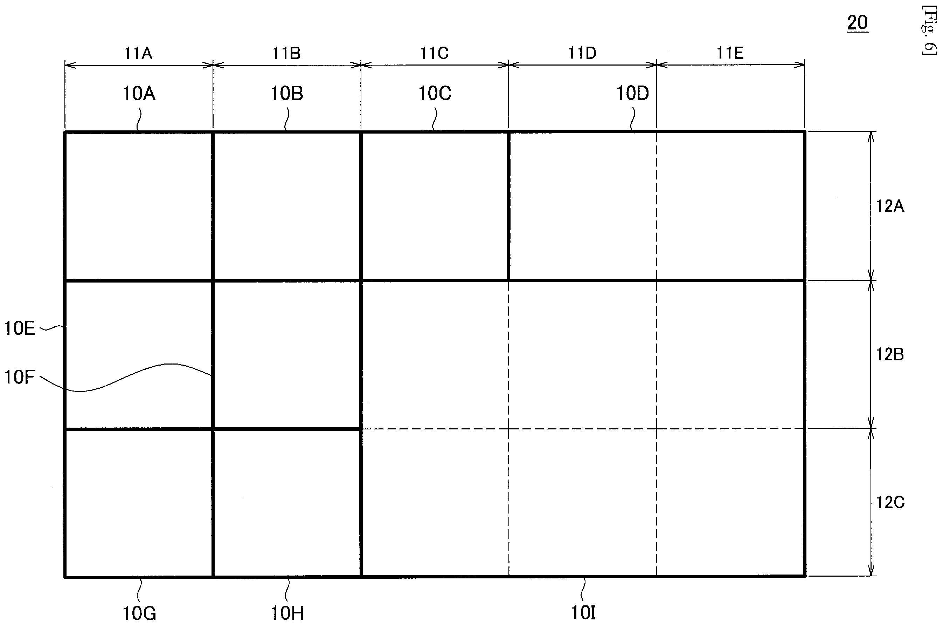

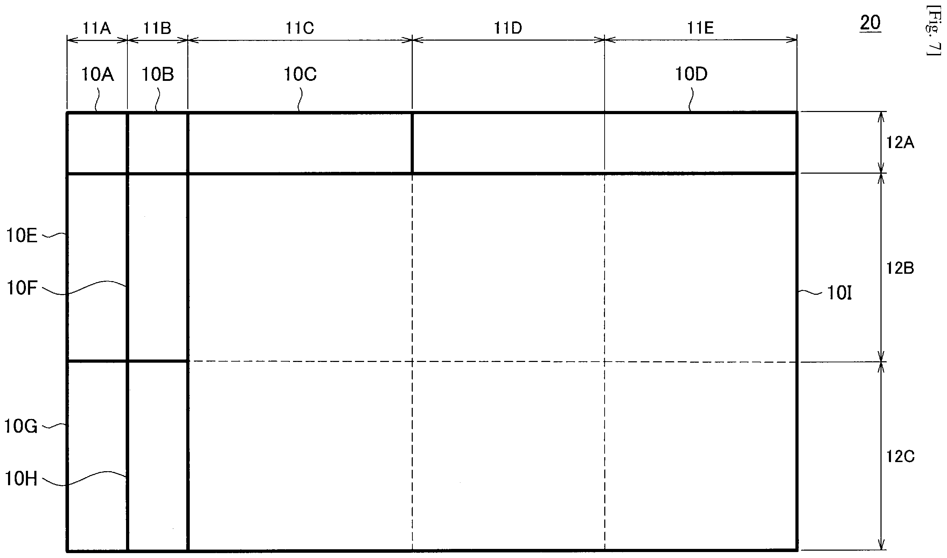

Next, a specific method of expanding and contracting the content regions will be described with reference to FIGS. 6 and 7.

FIG. 6 is an explanatory diagram illustrating the sizes of the content regions before expansion and contraction. Referring to FIG. 6, the content regions 10 (no content information is disposed) illustrated in FIG. 4 are illustrated. In this example, widths 11A to 11E are the same predetermined width, heights 12A to 12C are the same predetermined height, and tile-shaped regions with the width 11 and the height 12 are prepared in advance. Each content region 10 is formed by one or more tile-shaped regions. For example, the content region 101 is formed by 6 tile-shaped regions. The content region 10D is formed by two tile-shaped regions. The content regions 10A, 10B, 10C, 10E, 10F, 10G, and 10H are regions formed by one tile-shaped region. For example, each of the widths 11A to 11E is a width of 200 pixels. Each of the heights 12A to 12C is a height of 200 pixels. That is, a total width (a sum of the heights 11A to 11E) is a width of 1000 pixels and a total height (a sum of the heights 12A to 12C) is a height of 600 pixels.

FIG. 7 is an explanatory diagram illustrating the sizes of the content regions before expansion and contraction. Referring to FIG. 7, the content regions 10 (no content information is disposed) illustrated in FIG. 5 are illustrated. That is, the content regions 10 (no content information is disposed) are illustrated when the content region 101 is selected. For example, the content region 101 is selected. Then, the widths of the tile-shaped regions included in the content regions 10E, 10F, 10G, and 10H lining up with the content region 101 in the horizontal direction and the widths of the tile-shaped regions included in the content regions 10A and 10B located in the oblique direction of the content region 101 are first contracted up to a predetermined minimum width. That is, the widths 11A and the 11B are contracted up to the predetermined minimum width. Also, the heights of the tile-shaped regions included in the content regions 10C and 10D lining up with the content region 101 in the vertical direction and the heights of the tile-shaped regions included in the content regions 10A and 10B located in the oblique direction of the content region 101 are contracted up to a predetermined minimum height. That is, the height 12A is contracted up to the predetermined minimum height. Next, the width of the selected content region 101 is expanded up to a width obtained by subtracting a sum of the widths 11A and 11B which is the predetermined minimum width from the total width (that is, the sum of the widths 11A to 11E illustrated in FIG. 6). That is, the width (that is, each of the widths 11C, 11D, and 11E) of each of the tile-shaped regions included in the selected content region 101 is expanded up to a width which is 1/3 of the foregoing width obtained by subtracting the foregoing sum from the total width. Also, the height of the selected content region 101 is expanded up to a height obtained by subtracting the height 12A which is the predetermined minimum height from the total height (that is, the sum of the heights 12A to 12C illustrated in FIG. 6). That is, the height (that is, each of the heights 12B and 12C) of each of the tile-shaped regions included in the selected content region 101 is expanded up to a height which is 1/2 of the foregoing height obtained by subtracting the predetermined minimum height from the total height. For example, each (that is, the predetermined minimum width) of the widths 11A and 11B is a width of 50 pixels and each of the widths 11C, 11D, and 11E is a width of 300 pixels. Also, the height 12A (that is, the predetermined minimum height) is a height of 50 pixels and each of the heights 12B and 12C is a height of 275 pixels.

As described above, the screen control information is generated such that the selected content region is expanded and the other content regions are contracted in either direction while the relative positional relation among the plurality of content regions is maintained on the screen, and the screen is actually generated based on the screen control information.

Accordingly, for example, even when one content region is selected among the plurality of content regions, the plurality of content regions remain on the screen. Therefore, the original screen may not necessarily be displayed again to further select another content region among the plurality of content regions. Therefore, the user may not necessarily display the original screen again on a terminal apparatus in order to reselect other content after the user selects content once. Thus, it is possible to reduce a burden on the user selecting the content.

For example, even when one content region is selected among the plurality of content regions, the content can be reproduced in the expanded content region among the plurality of content regions or more detailed information regarding the content can be supplied while the positional relation among the plurality of content regions is maintained. Therefore, when the user selects and confirms the content, it is hardly necessary for the user to move his or her line of vision. As a result, the user can select and confirm the content quickly. Also, it is possible to reduce the burden on the user.

For example, as described above, it is possible to improve convenience for the user selecting the content.

In particular, when a content region is selected, normally, another screen is displayed to reproduce the content or supply more detailed information regarding the content in a case in which content regions line up in the vertical and horizontal directions on a screen. According to the expansion and contraction of the content regions described above, however, when one content region is selected among the plurality of content regions, the plurality of content regions can remain on the screen even in the case in which the content regions line up in the vertical and horizontal directions on the screen. As a result, as described above, it is possible to reduce the burden on the user selecting the content, and thus the convenience can be improved for the user.

### (Content regions included in screen)

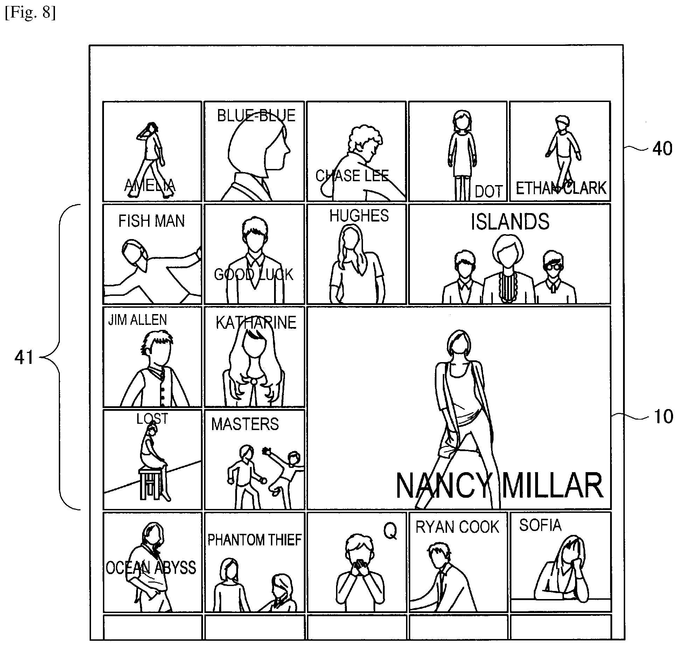

For example, information (hereinafter referred to as "field information") regarding a field including more content regions including the plurality of foregoing content regions is generated. Then, a range of a part of the field is generated as a screen. Hereinafter, a specific example of this point will be described with reference to FIG. 8.

FIG. 8 is an explanatory diagram illustrating an example of a field of which a range of a part is generated as a screen. Referring to FIG. 8, a field 40 including a great number of content regions 10 is illustrated. For example, a range 41 of a part of the field 40 is generated as a screen. As a result, as illustrated in FIG. 4, the screen 20 is displayed on the display device 101 of the information processing device 100. The range 41 is determined according to, for example, an input manipulation from the user. For example, the screen is scrolled according to an input manipulation from the user and any range in the field 40 is determined as the range 41 generated as the screen. As another example, the field 40 may be divided in units of pages (for example, a range of the tile-shaped regions of 3x5 illustrated in FIG. 6). Then, one page may be selected according to an input manipulation from the user and the selected page may be determined as the range 41 generated as the screen.

For example, the field is generated by lining up the tile-shaped regions in the vertical and horizontal directions and forming the content regions using the tile-shaped regions.

For example, the field information is information used to generate a screen. More specifically, for example, the field information includes information indicating the position and the size of each of the content regions in the field. For example, the field information includes information indicating content information (for example, an image and the name of an artist) disposed in each of the content regions. In this case, the screen control information may be the field information.

For example, the field is generated by an application providing content. For example, when a music player application is activated, the application generates field information of a field including content regions in which the content information is disposed, as illustrated in FIG. 8. Then, a part of the field is generated and displayed as a screen.

### (Further selection of content region)

For example, the region selection unit 155 further selects one content region among the plurality of content regions after selecting at least one content region among the plurality of content regions included in the screen. For example, the region selection unit 155 further selects one content region according to a further input manipulation from the user of the information processing device 100.

### - Selection of another content region

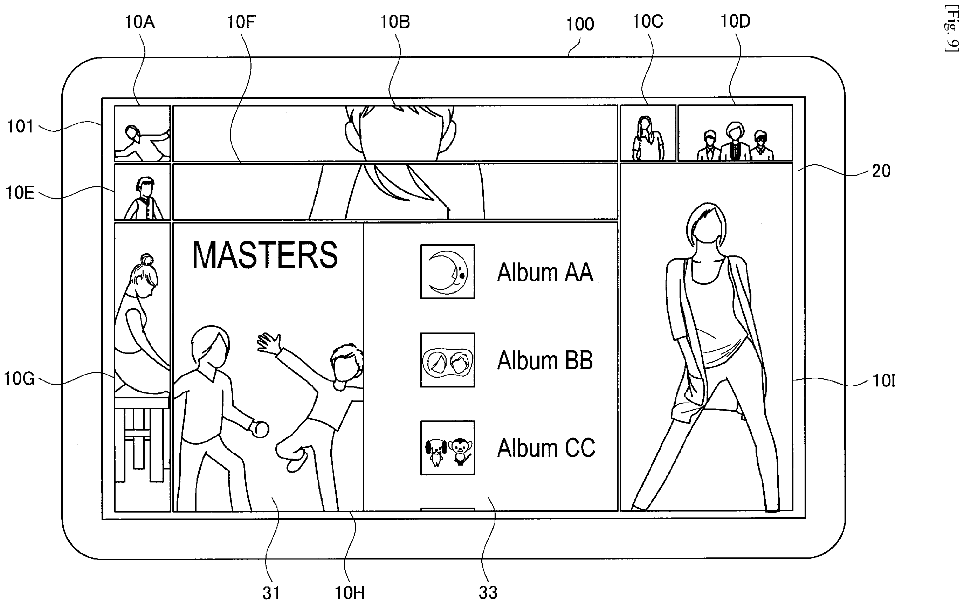

As a first example, at least one other content region is further selected among the plurality of content regions. Then, the screen control information generation unit 153 generates the screen control information such that the at least one other content region is expanded and the at least one content region is contracted while the relative positional relation among the plurality of content regions is maintained on the screen. Hereinafter, a specific example of this point will be described with reference to FIG. 9.

FIG. 9 is an explanatory diagram illustrating an example of a screen when another content region is further selected. The example of FIG. 9 is a screen when the content region 10H is selected among the 9 content regions 10 included in the screen illustrated in FIG. 5. Referring to FIG. 9, the further selected content region 10H is expanded in the vertical and horizontal directions of the screen 20. On the other hand, as illustrated in FIG. 5, the expanded content region 101 expanded in FIG. 5 is contracted in the horizontal direction of the screen 20. Thus, when another content region is further selected, the screen control information is generated such that the further selected content region is expanded and the previously selected content region is contracted, and the screen is actually generated based on the screen control information. Also, in the selected content region 10H, second information 33 (an image and the title of an album) regarding music content is disposed in addition to first information 31 (an image and the name of an artist) regarding the music content after the expansion.

Accordingly, for example, the user can reselect other content quickly without a burden after the user selects content once. That is, the convenience for the user selecting the content can be improved.

### - Reselection of same content region

As a second example, the at least one content region is reselected among the plurality of content regions. Then, the screen control information generation unit 153 generates the screen control information such that the size of each of the plurality of regions returns to the original size while the relative positional relation among the plurality of content regions is maintained on the screen.

Specifically, for example, when the screen illustrated in FIG. 5 is displayed, the content region 101 (that is, the expanded content region 101) is reselected among the 9 content regions 10. For example, the region selection unit 155 reselects the content region 101 when a touch position corresponds to a portion of the information (the image and the name of the artist) regarding the music content in the content region 101. Then, the sizes of the content regions 10A to 101 return to the original sizes, as illustrated in FIG. 4.

Accordingly, for example, even when the content region is selected once and the other content regions are contracted, the size of each of the contracted content regions returns to the original size, and subsequently the user can view the content information disposed in the content regions. Thus, for example, it is possible to reduce a burden on the user selecting the content.

### (Number of content regions included in screen)

For example, the screen after the expansion of at least one content region among the plurality of content regions and the screen before the expansion include the same number of content regions.

As a specific example, referring back to FIGS. 4 and 5, either the screen 20 (that is, the screen before the expansion of the content region 101) illustrated in FIG. 4 or the screen 20 (that is, the screen after the expansion of the content region 101) illustrated in FIG. 5 includes the 9 content regions 10, i.e., the content regions 10A to 101. Thus, the number of content regions before and after the expansion of the selected content region is maintained.

Accordingly, for example, all of the content regions included in the screen before the expansion remain even after the expansion of the selected content region. Therefore, even after the expansion, the user can confirm the content information disposed in the other content regions. Thus, the convenience for the user selecting the content can be further improved.

### (Content information disposed in content regions)

### - Content information disposed in content region before and after expansion of content region

For example, after at least one content region is expanded among the plurality of content regions, the content information disposed in the at least one content region is different from the content information disposed in the at least one region before the expansion.

More specifically, for example, the content information disposed in the at least one content region after the expansion includes information which is not included in the content information disposed in the at least one content region before the expansion. Accordingly, for example, the user can obtain new information by selecting the content region.

More specifically, for example, the content information disposed in each of the at least one content region before the expansion includes information of first hierarchy and does not include information of second hierarchy located lower than the first hierarchy. On the other hand, the content information disposed in each of the at least one content region after the expansion includes the information of the second hierarchy.

For example, referring back to FIGS. 4 and 5, as illustrated in FIG. 4, the content information disposed in the content region 101 before the expansion includes information of a higher layer such as the image and the name of the artist (the first information 31 regarding the music content), but does not include information of a lower layer such as the images and titles of the albums. On the other hand, as illustrated in FIG. 5, the content information disposed in the content region 101 after the expansion includes not only the information of the higher layer such as the image and the name of the artist (the first information 31 regarding the music content) but also the information of the lower layer such as the images and the titles of the albums (the second information 33 regarding the music content). Thus, the content information disposed in the content region after the expansion includes more detailed information.

Accordingly, for example, the user can confirm the hierarchical information in sequence. Therefore, the user can search for the content based on the information of the higher layer more quickly and can also confirm the content based on the information of the lower layer in more detail after the selection.

### - Content information further disposed in expanded content region

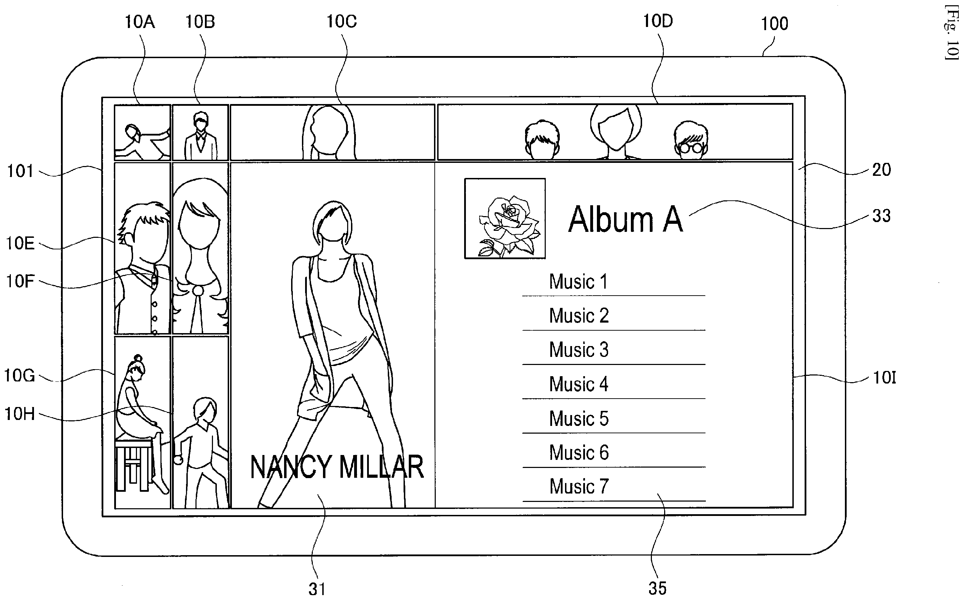

For example, as described above, the selected content region is expanded. Thereafter, when the information of the second hierarchy disposed in the selected content region is selected, information of third hierarchy located lower than the second hierarchy is disposed in the content region. Hereinafter, a specific example of this point will be described with reference to FIG. 10.

FIG. 10 is an explanatory diagram illustrating an example of a screen when the information disposed in the content region is selected. The example of FIG. 10 is a screen when one album is selected from a list of the albums (that is, the images and the titles of the plurality of albums) disposed in the content region 10H included in the screen illustrated in FIG. 5. Referring to FIG. 10, the content information disposed in the content region 101 includes third information 55 (song titles) regarding the music content in addition to the first information 31 (the image and the name of the artist) regarding the music content and the second information 33 (the images and the titles of the albums) regarding the music content. Thus, when the information (the image and the title of an album) of a higher layer is selected, the information (song title) of a lower layer corresponding to the information of the higher layer is disposed in the content region.

### - Content information disposed in each content region after expansion of content region

As a first example, after at least one content region among the plurality of content regions is expanded, the content information disposed in each of the content regions other than the at least one content region among the plurality of content regions includes the information of the first hierarchy and does not include the information of the second hierarchy. On the other hand, after the at least one content region is expanded, the content information disposed in each of the at least one content region includes the information of the second hierarchy. As described above, the information of the second hierarchy is information located lower than the first hierarchy.

For example, referring back to FIG. 5, after the expansion of the content region 101, the content information disposed in each of the content regions 10A to 10H includes the information of a higher layer such as the image of an artist (the first information 31 regarding the music content). However, the content information disposed in each of the content regions 10A to 10H does not include information of a lower layer such as the image and the title of the album. On the other hand, the content information disposed in the content region 101 includes not only the information of the higher layer such as the image and the name of an artist (the first information 31 regarding the music content) but also the information of the lower layer such as the image and the title of an album (the second information 33 regarding the music content).

Accordingly, for example, the user can confirm the content based on the information of the lower layer in the expanded content region in more detail and can also confirm the information of the higher layer even in the other content regions. Therefore, the user can search for other content more quickly after the user confirms the content based on the information of the lower layer in the expanded content region in more detail.

As a second example, after at least one content region among the plurality of content regions is expanded, the content information disposed in each of the at least one content region includes text information. On the other hand, after the at least one content region is expanded, the content information disposed in each of the content regions other than the at least one content region among the plurality of content regions does not include text information.

For example, referring back to FIG. 5, after the expansion of the content region 101, the content information disposed in the content region 101 includes an artist name (text information). On the other hand, the content information disposed in each of the content regions 10A to 10H does not include an artist name (text information).

Accordingly, for example, the content region can be contracted without a restriction on the text information (for example, a restriction that the content region not be contracted up to a size in which the text information is no longer visible). Therefore, the selected content region can be expanded to be larger. For example, by disposing text information in a contracted small content region, it is possible to prevent the entire content information disposed in the content region from being difficult to see.

### - Content information disposed in content region before and after contraction of content region

For example, before the other content regions among the plurality of content regions are contracted, the content information disposed in each of one or more content regions among the other content regions includes an image. After the contraction, the content information disposed in each of the one or more content regions among the other content regions includes a trimmed image obtained by trimming the image.

For example, as illustrated in FIG. 4, before the contraction of the screen 20 in the vertical direction, the content regions 10C and 10D include images of artists. On the other hand, as illustrated in FIG. 5, after the contraction of the screen 20 in the vertical direction, the content regions 10C and 10D include the trimmed images of the images. Also, as illustrated in FIG. 4, before the contraction of the screen 20 in the horizontal direction, the content regions 10E, 10F, 10G, and 10H include images of artists. On the other hand, as illustrated in FIG. 5, after the contraction of the screen 20 in the horizontal direction, the content regions 10E, 10F, 10G, and 10H include trimmed images of the images.

Accordingly, for example, it is easier for the user to see the images in the content regions after the contraction, compared to a case in which images are simply contracted according to contraction of the content regions. As a result, it can be easier for the user to search for the content.

For example, the trimmed image is an image including a portion having a predetermined feature in the image.

For example, as illustrated in FIG. 5, the content regions 10C and 10D each include a trimmed image including a face portion of a person. Also, the content regions 10E, 10F, 10G, and 10H each include a trimmed image including a face portion of a person.

Accordingly, for example, it can be easier for the user to search for the content.

### - Lining sequence of content information on screen

The content information disposed in the plurality of content regions included in the screen lines up in a predetermined sequence on the screen.

For example, as in the example of the screen 20 illustrated in FIG. 4 (or the example of the field 40 illustrated in FIG. 8), the plurality of pieces of content information included in the screen line up in an alphabetical sequence. Also, the plurality of pieces of content information may line up in a ranking sequence of the content (or artists), an increasing ranking sequence, or a chronological sequence instead of the alphabetical sequence.

Accordingly, for example, it can be easier for the user to search for the content.

As described above, the content information is disposed in the content regions. For example, the screen control information generation unit 153 generates screen control information such that the content information is disposed in this way.

### (Size of content region)

For example, each of the plurality of content regions included in the screen has a size according to an evaluation index corresponding to the disposed content information. The evaluation index is, for example, a rank or the number of displays of the content (or an artist) corresponding to the content information.

For example, in the example illustrated in FIG. 4, the evaluation index corresponding to the content information disposed in the content region 10I is the highest and the evaluation index corresponding to the content information disposed in the content region 10D is the second highest. Therefore, the size of the content region 10I corresponds to a size of 6 tile-shaped regions and the size of the content region 10D corresponds to a size of 2 tile-shaped regions. Also, the size of each of the content regions 10 other than the content regions 10D and 10I corresponds to a size of 1 tile-shaped region.

Accordingly, for example, the content with a larger evaluation index can be noticed on the screen, and thus the user recognizes the content more easily.

### (Brightness of content region)

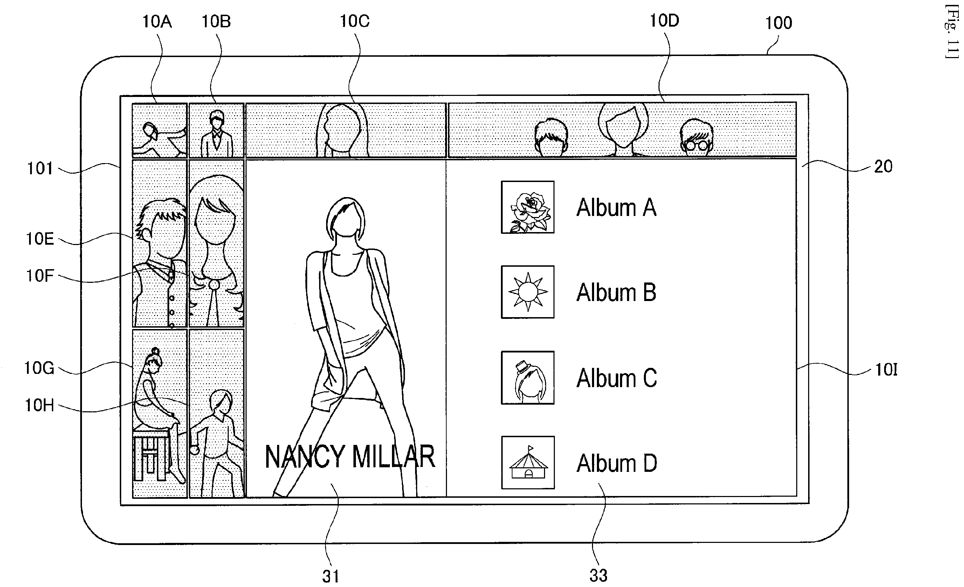

For example, at least one content region is selected among the plurality of content regions. Then, the screen control information generation unit 153 may generate the screen control information such that the at least one content region is brighter than the regions other than the at least one content region among the plurality of content regions on the screen. For example, by changing setting (for example, a setting value in the screen control information) of masking, color combination, or the like between the selected content region and the other content regions, the selected content region becomes brighter than the other content regions. Hereinafter, a specific example of this point will be described with reference to FIG. 11.

FIG. 11 is an explanatory diagram illustrating another example of the screen when the content region is selected. The example of FIG. 11 is a screen when the content region 101 is selected among the 9 content regions 10 included in the screen illustrated in FIG. 4. Referring to FIG. 11, the selected content region 101 is expanded in the vertical and horizontal directions of the screen 20. Then, the content region 101 becomes brighter than the content regions 10A to 10H. Thus, the screen control information is generated such that the selected content region is brighter than the other content regions, and the screen is actually generated based on the screen control information.

Accordingly, for example, the selected content region can be more noticeable. Thus, it is easier for the user to see the selected content region.

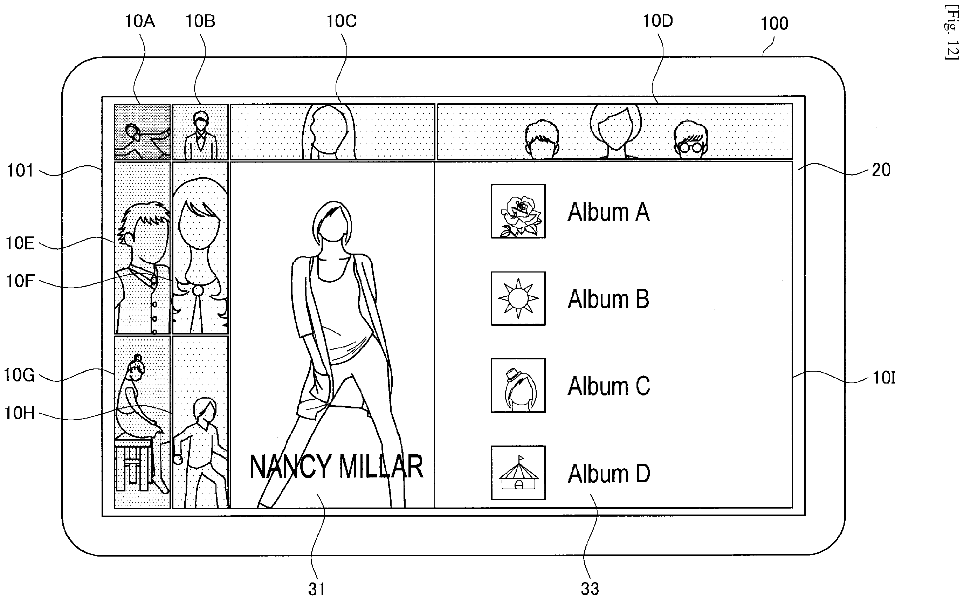

For example, the screen control information generation unit 153 may generate the screen control information such that closer regions become brighter by the at least one content region among the plurality of content regions on the screen. Hereinafter, a specific example of this point will be described with reference to FIG. 12.

FIG. 12 is an explanatory diagram illustrating still another example of the screen when the content region is selected. The example of FIG. 12 is also a screen when the content region 101 is selected among the 9 content regions 10 included in the screen illustrated in FIG. 4. Referring to FIG. 12, the selected content region 101 is expanded in the vertical and horizontal directions of the screen 20. Then, the content regions 10 closer to the content region 101 become brighter. Thus, the screen control information is generated such that the content regions closer to the selected content region become brighter, and the screen is actually generated based on the screen control information.

Accordingly, for example, the selected content region can be further noticed and it is also easier for the user to see the close content regions by the selected content region.

### (Various kinds of content)

The examples described with reference to FIGS. 4 to 12 are examples in which content is music content. However, as described above, the content is not limited to the music content. For example, content may be still image content, moving image content, or document content.

### - Still image content

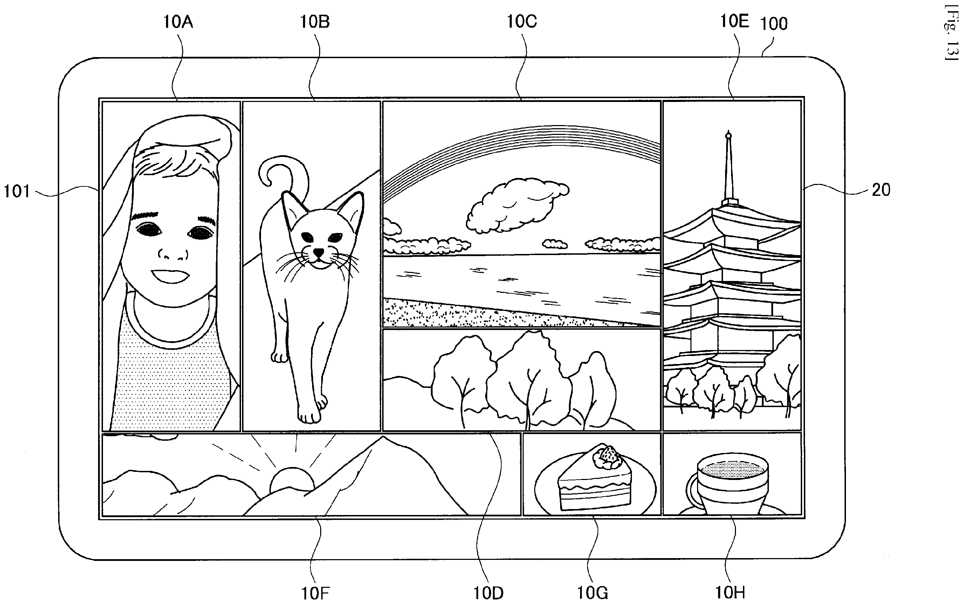

FIG. 13 is an explanatory diagram illustrating an example of a screen when the content is still image content. Referring to FIG. 13, the information processing device 100 is illustrated. A screen 20 including 8 content regions 10 (that is, content regions 10A to 10H) is displayed on the display device 101 of the information processing device 100. Also, still image content (for example, photo content) after contraction or trimming is disposed as content information in each content region.

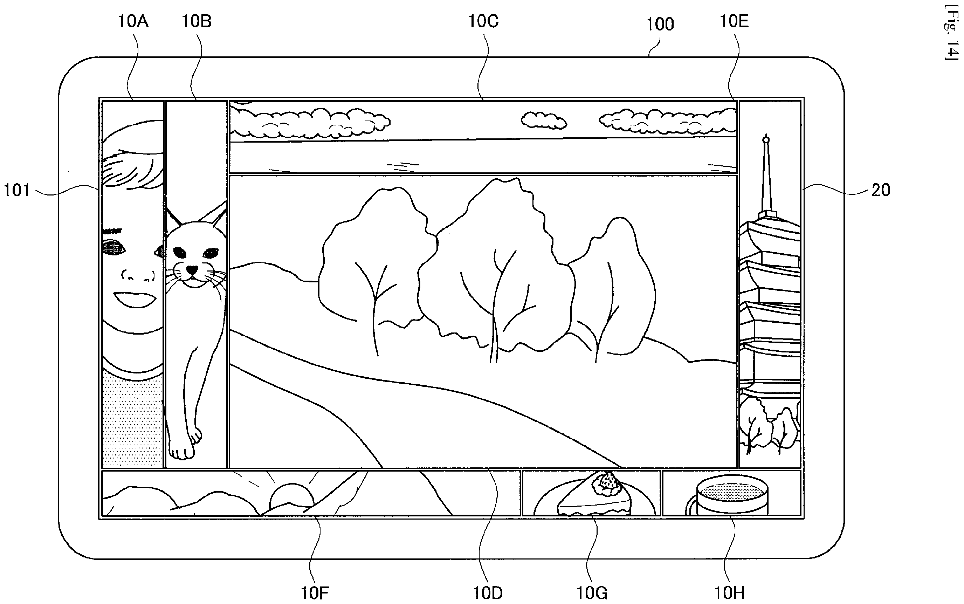

FIG. 14 is an explanatory diagram illustrating an example of the screen when a content region is selected in the case in which the content is the still image content. The example of FIG. 14 is a screen when the content region 10D is selected among the 8 content regions 10 included in the screen illustrated in FIG. 13. Referring to FIG. 14, the selected content region 10D is expanded in the vertical and horizontal directions of the screen 20. Also, the content regions 10C, 10F, and 10G lining up with the content region 10D in the vertical direction are contracted in the vertical direction of the screen 20. Also, the content regions 10A, 10B, and 10E lining up with the content region 10D in the horizontal direction are contracted in the horizontal direction of the screen 20. Also, the content region 10H located in an oblique direction of the content region 10D is contracted in the vertical direction of the screen 20. Still image content which is not contracted or trimmed is disposed in the expanded content region 10D.

As described above, the content may be still image content.

### - Moving image content

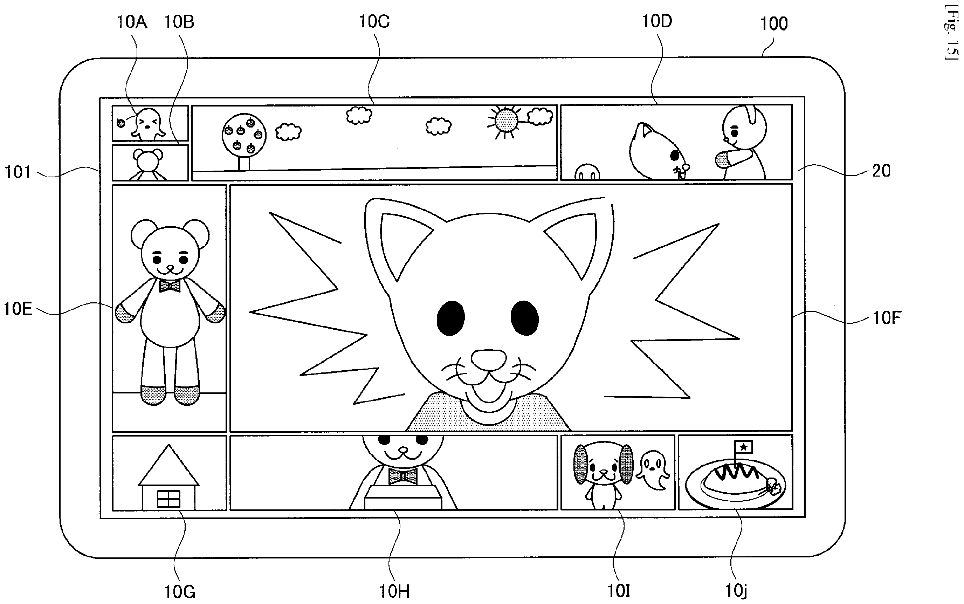

FIG. 15 is an explanatory diagram illustrating an example of a screen when a content region is selected in the case in which the content is moving image content. Referring to FIG. 15, the information processing device 100 is illustrated. A screen 20 including 10 content regions 10 (that is, content regions 10A to 10J) is displayed on the display device 101 of the information processing device 100. In this example, the content region 10F is selected and expanded. On the other hand, the other content regions 10 are contracted in either direction. Also, information regarding the moving image content is disposed as content information in each of the content regions 10. For example, the moving image content is moving image content of each scene and the information regarding the moving image content is an image of a starting time point or a time point of interest of each scene. A large image is disposed in the expanded content region 10F and small images are disposed in the other content regions 10. Also, for example, corresponding moving image content of a scene is reproduced in the expanded content region 10F according to an additional input manipulation from the user.

### - Document content

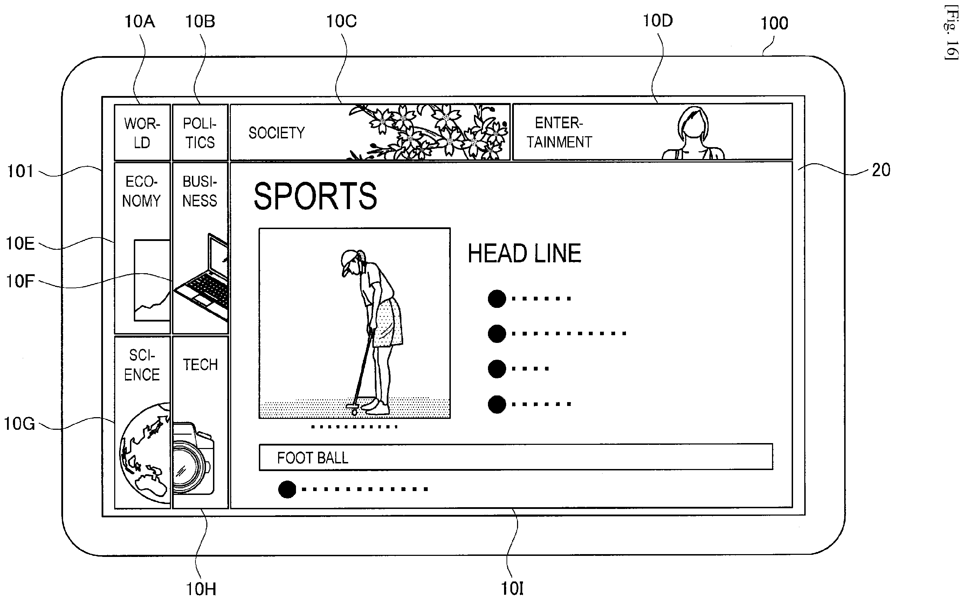

FIG. 16 is an explanatory diagram illustrating an example of a screen when the content is document content. In particular, in this example, the document content is web content (for example, a web page). Referring to FIG. 16, the information processing device 100 is illustrated. A screen 20 including 9 content regions 10 (that is, content regions 10A to 101) is displayed on the display device 101 of the information processing apparatus 100. In this example, the content region 101 is selected and expanded. On the other hand, the other content regions 10 are contracted in either direction. A part or all of the web content (for example, news content according to categories) is disposed as content information in each content region 10. Specifically, for example, web content is disposed in the expanded content region 10F, and parts of news category names and images of headlines in the web content are disposed in the other content regions 10. Also, for example, the entire web content can be browsed by scrolling in the expanded content region 10F.

As described above, for example, the content may be still image content, moving image content, or document content. The content may of course be content other than such content.

The specific examples of the screen control according to embodiments of the present disclosure have been described above. The examples in which the content regions are square or rectangular regions have been described as the specific examples. However, the content regions according to embodiments of the present disclosure are not limited to the related example. For example, the content regions may be other tetragonal (parallelogram, trapezoidal, or the like) regions. As another example, the content regions may have a polygonal shape other than the tetragonal shape (for example, triangular, pentagonal, or hexagonal). As still another example, the content regions may be regions with a shape other than polygonal shape, such as a circular or elliptical shape.

### <1.5. Processing flow>

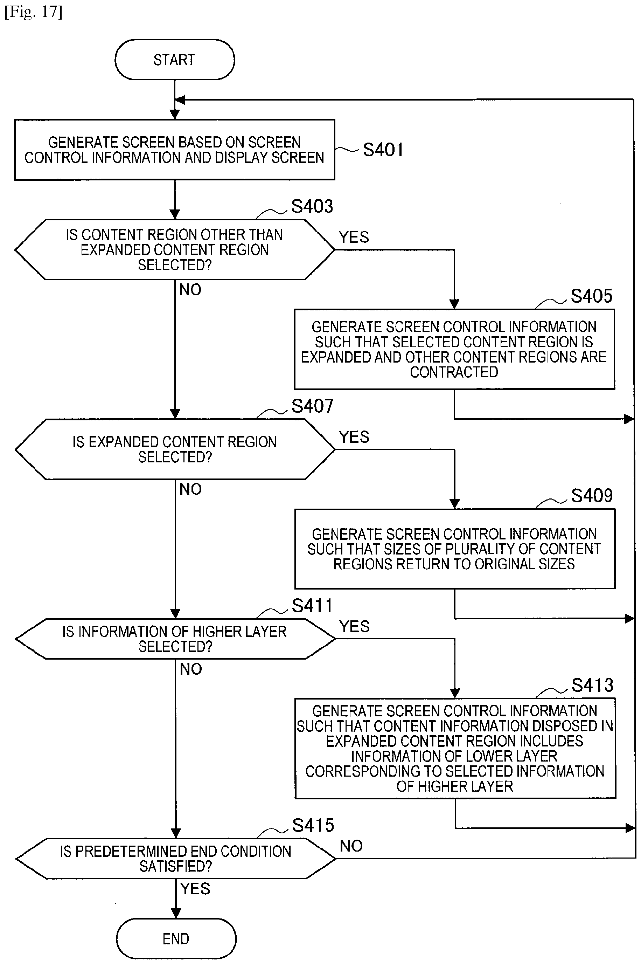

Next, an example of information processing according to the first embodiment will be described with reference to FIG. 17. FIG. 17 is a flowchart illustrating an example of an overall flow of the information processing according to the first embodiment.

The display control unit 157 generates a screen including a plurality of content regions based on the screen control information and causes the display unit 130 to display the screen (S401).

When a content region other than an expanded content region is selected (Yes in S403), the screen control information generation unit 153 generates screen control information such that the selected content region is expanded and the other content regions are contracted (S403).

Also, when the expanded content region is selected (Yes in S407), the screen control information generation unit 153 generates screen control information such that the sizes of the plurality of content regions return to the original sizes (S409).

Also, when the information of a higher layer disposed in the expanded content region is selected (Yes in S411), the screen control information generation unit 153 generates the screen control information such that the content information disposed in the expanded content region includes the information of a lower layer corresponding to the selected information of the higher layer (S413).

Also, as described above, when the screen control information is generated (S405, S409, and S413), the screen control information is updated and the process returns to step S401.

On the other hand, when a predetermined end condition is satisfied (Yes in S415), the process ends. Otherwise (No in S415), the process returns to step S401.

The first embodiment of the present disclosure has been described above. The example in which the information processing device 100 is a terminal device and the terminal device is a tablet terminal has been described as the example of the first embodiment, but the first embodiment is not limited to the related example. For example, the information processing device 100 may be another terminal device such as a smartphone, a PC, a portable information terminal (person digital assistant), an electronic book terminal, a car navigation system, or a game device.

### <<2. Second embodiment>>

Next, a second embodiment of the present disclosure will be described.

### <2.1. Overall configuration of information processing system>

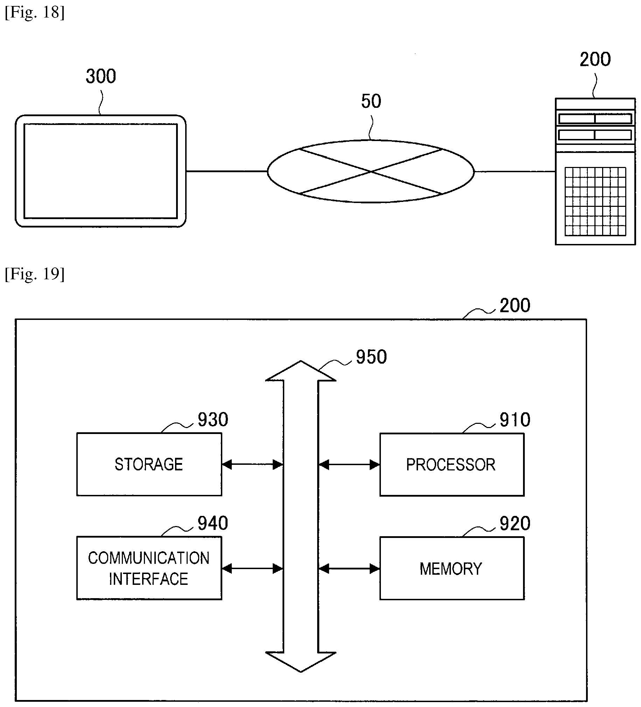

First, an overall configuration of an information processing system according to the second embodiment of the present disclosure will be described with reference to FIG. 18. FIG. 18 is an explanatory diagram illustrating an example of the overall configuration of an information processing system according to the second embodiment. Referring to FIG. 18, the information processing system includes an information processing device 200 and a terminal device 300. The information processing device 200 is, for example, a server. The terminal device 300 is, for example, a tablet terminal.

The information processing device 200 and the terminal device 300 communicate with each other via a network 50. The network 50 includes a wired network and a wireless network.

The information processing device 200 generates information (that is, screen control information) for controlling a screen including a plurality of regions in which content information is disposed. For example, the information processing device 200 supplies the generated screen control information to the terminal device 300.

The terminal device 300 displays the screen including the plurality of regions in which the content information is disposed. For example, the terminal device 300 acquires the screen control information generated by the information processing device 200, generates a screen based on the screen control information, and displays the screen.

For example, the terminal device 300 receives an input manipulation from the user of the terminal device 300 and supplies input information according to the input manipulation to the information processing device 200.

### <2.2. Hardware configuration of information processing device>

Next, an example of a hardware configuration of the information processing device 200 according to the second embodiment will be described with reference to FIG. 19. FIG. 19 is a block diagram illustrating an example of the hardware configuration of the information processing device 200 according to the second embodiment. Referring to FIG. 19, the information processing device 200 includes a processor 910, a memory 920, a storage 930, a communication interface 940, and a bus 950.

The processor 910 may be, for example, a CPU, a DSP, or an SoC and performs various processes of the information processing device 200. The memory 920 includes a RAM and a ROM and stores a program executed by the processor 910 and data. The storage 930 can include a storage medium such as a semiconductor memory or a hard disk.

The communication interface 940 is a communication unit of the information processing device 200 and communicates with an external device via a network (or directly). The communication interface 940 may be an interface for wired communication and may, in this case, include a connection terminal, a transmission circuit, and a circuit for other communication processing, for example. Also, the communication interface 940 may be an interface for wireless communication and may, in this case, include a communication antenna, an RF circuit, and a baseband processor, for example.

The bus 950 connects the processor 910, the memory 920, the storage 930, and the communication interface 940 to each other. The bus 950 may include a plurality of kinds of buses.

### <2.3. Functional configuration of information processing device>

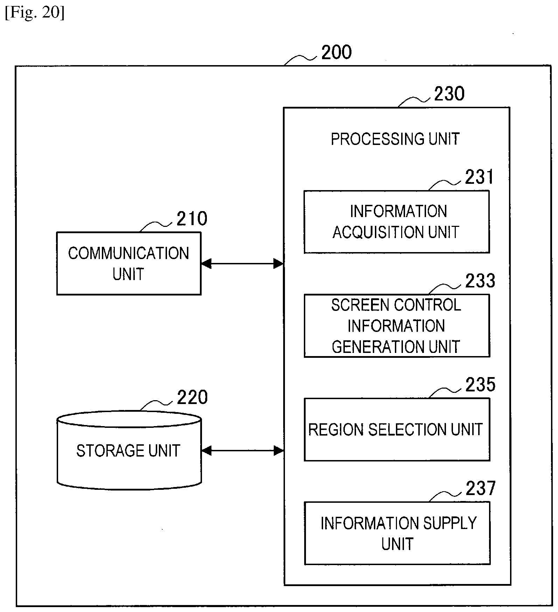

Next, an example of a functional configuration of the information processing device 200 according to the second embodiment will be described with reference to FIG. 20. FIG. 20 is a block diagram illustrating an example of the functional configuration of the information processing device 200 according to the second embodiment. Referring to FIG. 20, the information processing device 200 includes a communication unit 210, a storage unit 220, and a processing unit 230.

### (Communication unit 110)

The communication unit 210 communicates with another device. For example, the communication unit 210 receives information from another device and provides the information to the processing unit 230. Also, the communication unit 210 transmits information from the processing unit 230 to another device.

### (Storage unit 220)

The storage unit 220 stores a program and data used for an operation of the information processing device 200.

### (Processing unit 230)

The processing unit 230 supplies various functions of the information processing device 200. The processing unit 230 includes an information acquisition unit 231, a screen control information generation unit 233, a region selection unit 235, and an information supply unit 237.

### (Information acquisition unit 231, screen control information generation unit 233, and region selection unit 235)

The information acquisition unit 231, the screen control information generation unit 233, and the region selection unit 235 operate in the same ways as the information acquisition unit 151, the screen control information generation unit 153, and the region selection unit 155 of the information processing device 100 according to the first embodiment.

In the second embodiment, input information obtained according to an input manipulation from a user is supplied to the terminal device 300 via the communication unit 210. In the second embodiment, the user is not the user of the information processing device 200 but the user of the terminal device 300.

### (Information supply unit 237)

The information supply unit 237 supplies information to another device. For example, the information supply unit 237 supplies information to another device via the communication unit 210.

In the second embodiment, for example, the information supply unit 237 supplies the generated screen control information to the terminal device 300. More specifically, for example, when the screen control information generation unit 233 generates new screen control information, the information supply unit 237 supplies the new screen control information to the terminal device 300 via the communication unit 210. Then, the terminal device 300 generates a screen based on the new screen control information and displays the screen.

### <2.4. Processing flow>

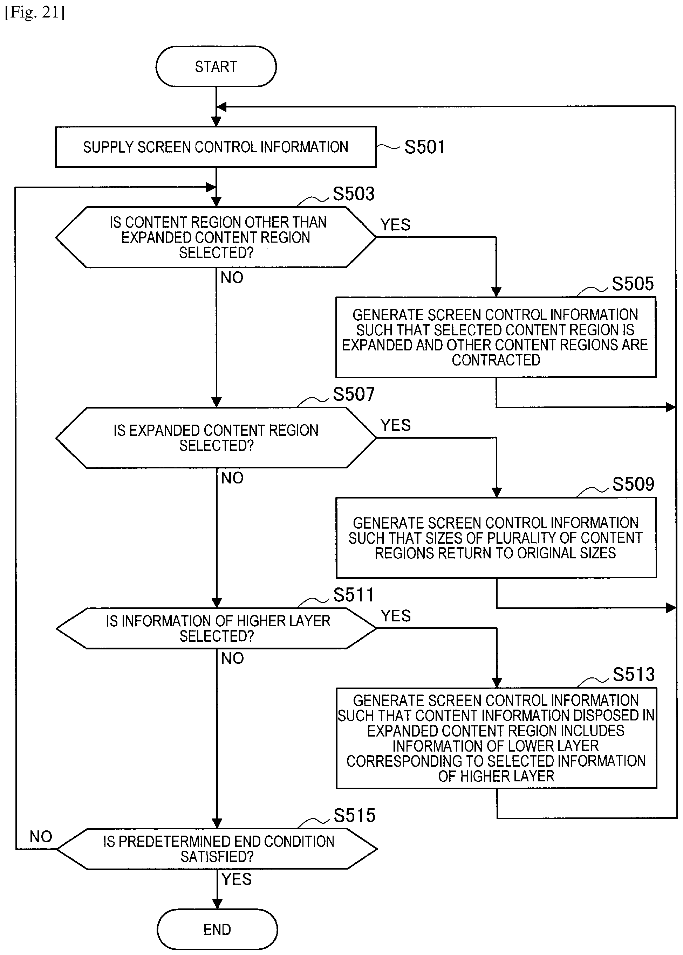

Next, an example of the information processing according to the second embodiment will be described with reference to FIG. 21. FIG. 21 is a flowchart illustrating an example of an overall flow of the information processing according to the second embodiment. Steps S503 to S513 according to the second embodiment are the same as steps S403 to S413 according to the first embodiment described with reference to FIG. 17. Accordingly, only steps S501 and S515 will be described here.

The information supply unit 237 supplies the screen control information to the terminal 300 (S501).

When a predetermined end condition is satisfied (Yes in S515), the process ends. Otherwise (No in S515), the process returns to step S503.

The second embodiment of the present disclosure has been described above. The example in which the terminal device 300 generates the screen based on the screen control information and displays the screen has been described as the example of the second embodiment. However, the second embodiment is not limited to the related example. For example, the information processing device 200 may generate a screen (that is, an image) based on screen control information and supply the screen to the terminal device 300. Then, the terminal device 300 may display the screen. That is, the terminal device 300 may be a thin client.

The example in which the information processing device 200 is a server has been described as the example of the second embodiment, but the second embodiment is not limited to the related example. For example, the information processing device 200 may be one terminal device other than the terminal device 300. Also, the terminal device 300 is not limited to a tablet terminal, but may be another terminal device such as a smartphone, a PC, a portable information terminal, an electronic book terminal, a car navigation system, or a game device.

### <<3. Conclusion>>

The information processing device and the information processing method according to embodiments of the present disclosure have been described above with reference to FIGS. 1 to 21. According to an embodiment of the present disclosure, a screen control information generation unit generates information (that is, screen control information) for controlling a screen including a plurality of regions in which content information is disposed. A region selection unit selects at least one content region among the plurality of content regions. The screen control information generation unit generates the screen control information such that the at least one content region is expanded and other content regions of the plurality of content regions are contracted while a relative positional relation among the plurality of content regions is maintained on the screen.

Accordingly, for example, even when one content region is selected among the plurality of content regions, the plurality of content regions remain on the screen. Therefore, the original screen may not necessarily be displayed again to further select another content region among the plurality of content regions. Therefore, the user may not necessarily display the original screen again on the terminal device in order to reselect other content after the user selects content once. Thus, it is possible to reduce a burden on the user selecting content.

For example, even when one content region is selected among the plurality of content regions, the content can be reproduced in the expanded content region among the plurality of content regions or more detailed information regarding the content can be supplied while the positional relation among the plurality of content regions is maintained. Therefore, when the user selects and confirms the content, it is hardly necessary for the user to move his or her line of vision. As a result, the user can select and confirm the content quickly. Also, it is possible to reduce the burden on the user.

For example, as described above, it is possible to improve convenience for the user selecting the content.

For example, the plurality of content regions are regions lining up on the screen in the vertical and horizontal directions of the screen.

In particular, when a content region is selected, normally, another screen is displayed to reproduce the content or supply more detailed information regarding the content in a case in which content regions line up in the vertical and horizontal directions on a screen. According to the expansion and contraction of the content regions described above, however, when one content region is selected among the plurality of content regions, the plurality of content regions can remain on the screen even when the content regions line up in the vertical and horizontal directions on the screen. As a result, as described above, it is possible to reduce the burden on the user selecting the content, and thus the convenience for the user can be improved.

For example, when at least one content region is selected, the screen control information generation unit generates the screen control information such that the at least one content region is expanded in the vertical and horizontal directions of the screen and the other content regions are contracted in at least one of the vertical and horizontal directions of the screen while the relative positional relation among the plurality of content regions is maintained on the screen.

More specifically, for example, when at least one content region is selected, the screen control information generation unit generates the screen control information such that the at least one content region is expanded in the vertical and horizontal directions of the screen, the content region lining up with the at least one content region in the vertical direction of the screen is contracted in the vertical direction of the screen, the content region lining up with the at least one content region in the horizontal direction of the screen is contracted in the horizontal direction of the screen, and the content region located in an oblique direction of the at least one content region is contracted in at least one of the vertical and horizontal directions of the screen while the relative positional relation among the plurality of content regions is maintained on the screen.

### - Further selection of content region

For example, the region selection unit 155 further selects one content region among the plurality of content regions after selecting the at least one content region among the plurality of content regions included in the screen.

As a first example, at least one other content region is further selected among the plurality of content regions. Then, the screen control information generation unit 153 generates the screen control information such that the at least one other content region is expanded and the at least one content region is contracted while the relative positional relation among the plurality of content regions is maintained on the screen.

Accordingly, for example, the user can reselect other content quickly without a burden after the user selects content once. That is, the convenience for the user selecting the content can be improved.

As a second example, the at least one content region is reselected among the plurality of content regions. Then, the screen control information generation unit 153 generates the screen control information such that the size of each of the plurality of regions returns to the original size while the relative positional relation among the plurality of content regions is maintained on the screen.

Accordingly, for example, even when the content region is selected once and the other content regions are contracted, the size of each of the contracted content regions returns to the original size, and subsequently the user can view the content information disposed in the content regions. Thus, for example, it is possible to reduce a burden on the user selecting the content.

It should be understood by those skilled in the art that various modifications, combinations, sub-combinations and alterations may occur depending on design requirements and other factors insofar as they are within the scope of the appended claims or the equivalents thereof.

For example, the examples in which the information processing device is a completed device (for example, a tablet terminal or a server) have been described, but the information processing device according to embodiments of the present disclosure is not limited to the related examples. For example, the information processing device may be a device included in a completed product. In this case, the information processing device may be a component that includes at least the screen control information generation unit and the region selection unit. For example, the information processing device may be a chip mounted on a completed device (for example, a tablet terminal or a server).

The processing steps in the information processing device of the present specification may not necessarily be performed chronologically in the order described in the flowchart. For example, the processing steps in the information processing device may be performed in an order different from the order described in the flowchart or may be performed in parallel.

Also, a computer program causing hardware such as a CPU, a ROM, and a RAM included in the information processing device to carry out the equivalent functions as the above-described configuration of each apparatus can be generated. Also, a storage medium having the computer program stored therein can be provided. Also, an information processing device (for example, a processing circuit or a chip) including a memory (for example, a ROM and a RAM) storing the computer program and a processor (for example, a CPU) executing the computer program may be provided.

The advantageous effects described in the present specification are merely explanatory or exemplary, and thus are not limited. That is, in the technology according to an embodiment of the present disclosure, other advantageous effects apparent to those skilled in the art can be obtained from the description of the present specification in addition to the foregoing advantageous effects or instead of the foregoing advantageous effects.

### Reference Signs List

10 content region
20 screen
100 information processing device
153 screen control information generation unit
155 region selection unit
200 information processing device
233 screen control information generation unit
235 region selection unit
300 terminal device

## Claims

1. An information processing apparatus comprising:
a touch panel (850); and
a circuitry configured to:
initiate, upon a selection of a content region (10I) among multiple content regions (10A-10I) displayed on the touch panel (850), the multiple content regions (10A-10I) having a size according to an evaluation index, wherein the evaluation index is a rank corresponding to the content information disposed in a content region (10A-10I), a change in size of the selected content region (101) and at least one of a rearrangement and a resizing of other content regions (10A-10H) that are not the selected content region (10I),
wherein the other content regions (10A-10H) are at least one of rearranged and resized to each substantially maintain a respective relative positioning to the selected content region (101) as prior to the selection of the content region (10I),
wherein the selected content region (10I) comprises a display of a first content (31) and is one of increased in size or decreased in size in a direction along a first axis, and the other content regions (10A-10H) are another one of increased in size or decreased in size in the direction along the first axis, and
initiate, upon the selection of the content region (10I), a display of a second content (33) that is related to the first content (31),
wherein the first content (31) is a hierarchically higher level or layer than the second content (33), or
wherein the second content (33) is displayed within the selected content region (10I) that has been changed in size, or
wherein the first content (31) comprises information related to a media content, and the second content (33) comprises secondary information including metadata of media content.

2. The information processing apparatus of claim 1, wherein the selected content region (101) is increased in size in the direction along the first axis, and the other content regions (10A-10H) are decreased in size in the direction along the first axis.

3. The information processing apparatus of claim 2, wherein the increase in size of the selected content region (101) in the direction along the first axis reduces an area of a display region, within which the selected content region (10I) is provided and which is available for display of the other content regions (10A-10H), and the other content regions (10A-10H) are each at least one of rearranged and resized so as to be positioned within the area of the display region available for display.

4. The information processing apparatus of claim 1, wherein a size of a display region within which the selected content region (101) and other content regions (10A-10H) are provided is maintained from before to after the change in size of the selected content region (101) and resizing of the other content regions (10A-10H).

5. The information processing apparatus of claim 1, wherein the selected content region (101) and the other content regions (10A-10H) include a character and an image related to media content.

6. An information processing method comprising:
initiating, upon a selection of a content region among multiple content regions displayed on a touch panel, the multiple content regions having a size according to an evaluation index, wherein the evaluation index is a rank corresponding to the content information disposed in a content region (10A-10I), a change in size of the selected content region and at least one of a rearrangement and a resizing of other content regions that are not the selected content region,
wherein the other content regions are at least one of rearranged and resized to each substantially maintain a respective relative positioning to the selected content region as prior to the selection of the content region,
wherein the selected content region comprises a display of a first content (31) and is one of increased in size or decreased in size in a direction along a first axis, and the other content regions are another one of increased in size or decreased in size in the direction along the first axis, and
initiate, upon the selection of the content region, a display of a second content that is related to the first content,
wherein the first content is a hierarchically higher level or layer than the second content, or
wherein the second content is displayed within the selected content region that has been changed in size, or
wherein the first content comprises information related to a media content, and the second content comprises secondary information including metadata of media content.

7. A non-transitory computer-readable storage medium comprising instructions which, when executed by a computer, cause the computer to carry out the steps of the method of claim 6.

## Patentansprüche

1. Informationsverarbeitungsvorrichtung, die Folgendes umfasst:
ein Touchpanel (850) und
eine Schaltung, die zu Folgendem ausgelegt ist:
Initiieren von mehreren Inhaltsregionen (10A-10I) mit einer Größe gemäß einem Beurteilungsindex nach einer Auswahl einer Inhaltsregion (10I) unter den mehreren Inhaltsregionen (10A-10I), die auf dem Touchpanel (850) angezeigt werden, wobei der Beurteilungsindex ein Rang ist, der den Inhaltsinformationen, die in einer Inhaltsregion (10A-10I) angeordnet sind, einer Änderung der Größe der ausgewählten Inhaltsregion (10I) und mindestens einem einer Neuplatzierung und einer Größenänderung von anderen Inhaltsregionen (10A-10H), die nicht die ausgewählte Inhaltsregion (10I) sind, entspricht,
wobei die anderen Inhaltsregionen (10A-10H) mindestens eines von neu platziert und in der Größe geändert sind, um jeweils im Wesentlichen eine jeweilige relative Positionierung zur ausgewählten Inhaltsregion (10I) wie vor der Auswahl der Inhaltsregion (10I) beizubehalten,
wobei die ausgewählte Inhaltsregion (10I) eine Anzeige eines ersten Inhalts (31) umfasst und eines von in einer Richtung entlang einer ersten Achse vergrößert oder verkleinert ist und die anderen Inhaltsregionen (10A-10H) ein anderes von in der Richtung entlang der ersten Achse vergrößert oder verkleinert sind, und
nach der Auswahl der Inhaltsregion (10I) Initiieren einer Anzeige eines zweiten Inhalts (33), der auf den ersten Inhalt (31) bezogen ist,
wobei der erste Inhalt (31) eine hierarchisch höhere Ebene oder Schicht als der zweite Inhalt (33) ist oder wobei der zweite Inhalt (33) in der ausgewählten Inhaltsregion (10I), deren Größe geändert wurde, angezeigt wird oder
wobei der erste Inhalt (31) Informationen umfasst, die auf einen Medieninhalt bezogen sind, und der zweite Inhalt (33) sekundäre Informationen umfasst, die Metadaten eines Medieninhalts beinhalten.

2. Informationsverarbeitungsvorrichtung nach Anspruch 1, wobei die ausgewählte Inhaltsregion (10I) in der Richtung entlang der ersten Achse vergrößert ist und die anderen Inhaltsregionen (10A-10H) in der Richtung entlang der ersten Achse verkleinert sind.

3. Informationsverarbeitungsvorrichtung nach Anspruch 2, wobei die Vergrößerung der ausgewählten Inhaltsregion (10I) in der Richtung entlang der ersten Achse einen Bereich einer Anzeigeregion, in der die ausgewählte Inhaltsregion (10I) bereitgestellt ist und die zum Anzeigen der anderen Inhaltsregionen (10A-10H) verfügbar ist, reduziert und die anderen Inhaltsregionen (10A-10H) jeweils mindestens eines von neu platziert und in der Größe geändert sind, um in dem Bereich der Anzeigeregion, der zum Anzeigen verfügbar ist, positioniert zu sein.

4. Informationsverarbeitungsvorrichtung nach Anspruch 1, wobei eine Größe einer Anzeigeregion, in der die ausgewählte Inhaltsregion (10I) und andere Inhaltsregionen (10A-10H) bereitgestellt sind, von vor bis nach der Größenänderung der ausgewählten Inhaltsregion (10I) und der Größenänderung der anderen Inhaltsregionen (10A-10H) beibehalten wird.

5. Informationsverarbeitungsvorrichtung nach Anspruch 1, wobei die ausgewählte Inhaltsregion (10I) und die anderen Inhaltsregionen (10A-10H) ein Zeichen und ein Bild, die auf einen Medieninhalt bezogen sind, beinhalten.

6. Informationsverarbeitungsverfahren, das Folgendes umfasst:
Initiieren von mehreren Inhaltsregionen mit einer Größe gemäß einem Beurteilungsindex nach einer Auswahl einer Inhaltsregion unter den mehreren Inhaltsregionen, die auf einem Touchpanel angezeigt werden, wobei der Beurteilungsindex ein Rang ist, der den Inhaltsinformationen, die in einer Inhaltsregion (10A-10I) angeordnet sind, einer Änderung der Größe der ausgewählten Inhaltsregion und mindestens einem einer Neuplatzierung und einer Größenänderung von anderen Inhaltsregionen, die nicht die ausgewählte Inhaltsregion sind, entspricht,
wobei die anderen Inhaltsregionen mindestens eines von neu platziert und in der Größe geändert sind, um jeweils im Wesentlichen eine jeweilige relative Positionierung zur ausgewählten Inhaltsregion wie vor der Auswahl der Inhaltsregion beizubehalten,
wobei die ausgewählte Inhaltsregion eine Anzeige eines ersten Inhalts (31) umfasst und eines von in einer Richtung entlang einer ersten Achse vergrößert oder verkleinert ist und die anderen Inhaltsregionen ein anderes von in der Richtung entlang der ersten Achse vergrößert oder verkleinert sind, und
nach der Auswahl der Inhaltsregion Initiieren einer Anzeige eines zweiten Inhalts, der auf den ersten Inhalt bezogen ist,
wobei der erste Inhalt eine hierarchisch höhere Ebene oder Schicht als der zweite Inhalt ist oder
wobei der zweite Inhalt in der ausgewählten Inhaltsregion, deren Größe geändert wurde, angezeigt wird oder
wobei der erste Inhalt Informationen umfasst, die auf einen Medieninhalt bezogen sind, und der zweite Inhalt sekundäre Informationen umfasst, die Metadaten eines Medieninhalts beinhalten.

7. Nichttransitorisches computerlesbares Speichermedium, das Anweisungen umfasst, die, wenn sie von einem Computer ausgeführt werden, den Computer veranlassen, die Schritte des Verfahrens nach Anspruch 6 durchzuführen.

## Revendications

1. Appareil de traitement d'informations, comprenant :
un panneau tactile (850) ; et
une circuiterie configurée pour :
amorcer, lors de la sélection d'une région de contenu (10I) parmi de multiples régions de contenu (10A-10I) affichées sur le panneau tactile (850), les multiples régions de contenu (10A-10I) ayant une taille selon un indice d'évaluation, l'indice d'évaluation étant un rang correspondant à une information de contenu disposée dans une région de contenu (10A-10I), une variation de taille de la région de contenu (10I) sélectionnée et un réagencement et/ou un redimensionnement d'autres régions de contenu (10A-10H) qui ne sont pas la région de contenu (10I) sélectionnée,
les autres régions de contenu (10A-10H) étant réagencées et/ou redimensionnées pour que chacune maintienne sensiblement, par rapport à la région de contenu (10I) sélectionnée, un positionnement relatif respectif identique à celui antérieur à la sélection de la région de contenu (10I),
la région de contenu (10I) sélectionnée comprenant un affichage d'un premier contenu (31) et étant soit augmentée en taille, soit réduite en taille dans une direction le long d'un premier axe, et les autres régions de contenu (10A-10H) étant alors, respectivement, soit réduites en taille, soit augmentées en taille dans la direction le long du premier axe ; et
amorcer, au moment de la sélection de la région de contenu (10I), un affichage d'un second contenu (33) qui est relatif au premier contenu (31),
le premier contenu (31) ayant un niveau ou une couche hiérarchique supérieure à celui ou celle du second contenu (33), ou
le second contenu (33) étant affiché dans la région de contenu (10I) sélectionnée qui a fait l'objet d'une variation de taille, ou
le premier contenu (31) comprenant une information relative à un contenu multimédia, et le second contenu (33) comprenant une information secondaire incluant des métadonnées d'un contenu multimédia.

2. Appareil de traitement d'informations selon la revendication 1, dans lequel la région de contenu (10I) sélectionnée est réduite en taille dans la direction le long du premier axe, et les autres régions de contenu (10A-10H) sont réduites en taille dans la direction le long du premier axe.

3. Appareil de traitement d'informations selon la revendication 2, dans lequel l'augmentation de taille de la région de contenu (10I) sélectionnée dans la direction le long du premier axe réduit une surface d'une région d'affichage dans laquelle se trouve la région de contenu (10I) sélectionnée et qui est disponible pour l'affichage des autres régions de contenu (10A-10H), et les autres régions de contenu (10A-10H) étant chacune réagencées et/ou redimensionnées de manière à être positionnées dans la surface de la région d'affichage disponible pour l'affichage.

4. Appareil de traitement d'informations selon la revendication 1, dans lequel une taille d'une région d'affichage dans laquelle se trouvent la région de contenu (10I) sélectionnée et d'autres régions de contenu (10A-10H) est maintenue depuis avant jusqu'après la variation de taille de la région de contenu (10I) sélectionnée et le redimensionnement des autres régions de contenu (10A-10H).

5. Appareil de traitement d'informations selon la revendication 1, dans lequel la région de contenu (10I) sélectionnée et les autres régions de contenu (10A-10H) incluent un caractère et une image relatifs à un contenu multimédia.

6. Procédé de traitement d'informations, consistant à :
amorcer, lors de la sélection d'une région de contenu parmi de multiples régions de contenu affichées sur un panneau tactile, les multiples régions de contenu ayant une taille selon un indice d'évaluation, l'indice d'évaluation étant un rang correspondant à une information de contenu disposée dans une région de contenu (10A-10I), une variation de taille de la région de contenu sélectionnée et un réagencement et/ou un redimensionnement d'autres régions de contenu qui ne sont pas la région de contenu sélectionnée,
les autres régions de contenu étant réagencées et/ou redimensionnées pour que chacune maintienne sensiblement, par rapport à la région de contenu sélectionnée, un positionnement relatif respectif identique à celui antérieur à la sélection de la région de contenu,
la région de contenu sélectionnée comprenant un affichage d'un premier contenu (31) et étant soit augmentée en taille, soit réduite en taille dans une direction le long d'un premier axe, et les autres régions de contenu étant alors, respectivement, soit réduites en taille, soit augmentées en taille dans la direction le long du premier axe ; et
amorcer, au moment de la sélection de la région de contenu, un affichage d'un second contenu qui est relatif au premier contenu,
le premier contenu ayant un niveau ou une couche hiérarchique supérieure à celui ou celle du second contenu, ou
le second contenu étant affiché dans la région de contenu sélectionnée qui a été modifiée en taille, ou
le premier contenu comprenant une information relative à un contenu multimédia, et le second contenu comprenant une information secondaire incluant des métadonnées d'un contenu multimédia.

7. Support de stockage non temporaire et lisible par ordinateur, comprenant des instructions qui, lorsqu'elles sont exécutées par un ordinateur, amènent l'ordinateur à réaliser les étapes du procédé selon la revendication 6.
